# FASCICULE DE BREVET EUROPEEN

(11) **EP 3 503 712 B1**
(45) Date de publication et mention de la délivrance du brevet: **05.05.2021**
(21) Numéro de dépôt: 17739613.2
(22) Date de dépôt: 20.07.2017
(51) Int. Cl.: A01G 23/099

(54) **DISPOSITIF DE MARQUAGE D'UNE ECORCE DE TRONC D'ARBRE**
VORRICHTUNG ZUM MARKIEREN DER RINDE EINES BAUMSTAMMES
DEVICE FOR MARKING TREE TRUNK BARK

(30) Priorité: 25.08.2016 FR 1657934
(43) Date de publication de la demande: 03.07.2019
(73) Titulaire: Office National des Forêts, 75012 Paris (FR)
(72) Inventeur: DUPASQUIER, Alexis, 74170 Saint-Gervais-les-Bains (FR); LESZCZYNSKI, Aleksander, 68165 Mannheim (DE); LOUIS, Pascal, 88430 Bifontaine (FR); PILOY, Jefferson, 77290 Mitry-Mory (FR); RIVAT, David, 54160 Pulligny (FR); ROTH, Yoann, 70000 Mailley (FR); VICTORIEN, Nicolas, 75012 Paris (FR); WOJCIK, Dane, 62940 Haillicourt (FR)
(74) Mandataire: Nony
(86) Numéro de dépôt international: PCT/EP2017/068354
(87) Numéro de publication internationale: WO 2018/036725

(56) Documents cités:
- WO-A1-90/07870
- WO-A1-03/034809
- FR-A1- 2 793 994
- US-A- 3 702 739

## Description

La présente invention se rapporte au domaine de la sylviculture.

Le martelage est une opération qui consiste à marquer les arbres qui seront coupés ou laissés sur pied.

On utilise généralement pour ce faire des rubans en plastique, des entailles faites au marteau forestier ou des marques de peinture. Un exemple de dispositif de marquage des arbres est décrit dans la demande FR2793944.

L'invention vise à perfectionner encore les dispositifs de marquage d'une écorce de tronc d'arbre à l'aide de peinture, en substituant l'usage d'aérosols par un outil alternatif visant à améliorer les conditions de confort du personnel chargé de cette opération et à réduire les déchets inhérents à cette activité.

L'invention a ainsi pour objet un dispositif de marquage d'une écorce de tronc d'arbre, comportant :
- un logement pour recevoir au moins partiellement un récipient contenant une peinture,
- un applicateur alimenté en peinture, de préférence par une pompe actionnable manuellement depuis le récipient,
- un organe de commande de la distribution de peinture, définissant une surface d'appui sur laquelle l'utilisateur peut appuyer pour déclencher l'alimentation de l'applicateur en peinture,
- un grattoir configuré pour nettoyer l'écorce de l'arbre avant l'application de la peinture,
- une lame de nettoyage dont le bord libre est au contact ou à faible distance de la surface applicatrice de l'applicateur pour enlever mousses ou lichens ou autres débris adhérant à l'applicateur.

L'utilisation d'un applicateur limite le risque de perte de peinture lors de l'utilisation du dispositif, comparativement à une application de peinture par pulvérisation.

De plus, l'intégration d'un grattoir au dispositif permet d'effectuer d'une seule main le nettoyage et l'application de peinture et limite les gestes nécessaires au marquage de l'écorce.

De préférence, le grattoir comporte des dents, ce qui facilite l'enlèvement des mousses ou lichens.

La surface applicatrice est avantageusement alimentée depuis un espace intérieur à l'applicateur, le dispositif comportant un conduit d'alimentation en peinture de l'applicateur à partir du récipient.

De préférence, l'applicateur est un rouleau, par exemple avec un manchon en mousse synthétique. Un tel rouleau peut présenter en surface un revêtement définissant la surface applicatrice, adapté à absorber la peinture et à la restituer sur l'écorce lors de la rotation du rouleau. Un tel revêtement peut être formé d'un textile, d'un flocage et/ou d'une mousse.

Le rouleau comporte un moyeu qui est guidé en rotation par le dispositif, notamment par un axe de support creux porté par au moins un bras de support, de préférence un seul bras de support, ce qui permet de faciliter le démontage du rouleau en fin d'opération pour un entretien encore plus aisé.

De préférence, le dispositif est allongé selon un axe longitudinal, le rouleau tournant autour d'un axe de rotation orienté perpendiculairement à cet axe longitudinal, et l'axe de rotation est avantageusement contenu dans un plan décalé du côté de la surface d'appui de l'organe de commande par rapport à l'axe longitudinal du dispositif. Cette disposition permet de définir une position d'application plus confortable pour le poignet de l'utilisateur.

Le grattoir et l'applicateur peuvent être entièrement situés du même côté d'un plan comprenant l'axe longitudinal du dispositif. Cette disposition permet à l'utilisateur d'utiliser l'applicateur et le grattoir sans devoir retourner le dispositif. Dans ce cas, il est avantageux que le dispositif comporte un carter de protection de la main de l'utilisateur, la surface d'appui de l'organe de commande étant disposée entre le carter de protection et le corps du dispositif. Cela permet d'éviter que l'utilisateur ne se râpe la main sur le tronc d'arbre lors du marquage.

Le grattoir peut être fixé sur le carter de protection, notamment à sa base. Cet agencement apporte davantage de commodité pour l'utilisateur lors de l'utilisation du dispositif. Le carter de protection peut avoir une forme arquée, convexe vers l'extérieur.

En variante, le grattoir et l'applicateur sont disposés respectivement de part et d'autre d'un plan contenant l'axe longitudinal du dispositif. Cela oblige l'utilisateur à retourner le dispositif pour utiliser le grattoir mais rend dans ce cas moins utile la présence du carter de protection précité.

L'organe de commande comporte de préférence une poignée articulée sur le corps du dispositif, cette poignée définissant la surface d'appui précitée.

Le dispositif peut comporter un écran en arrière de l'applicateur et au-dessus du grattoir. Cet écran réduit le risque d'un contact accidentel entre le rouleau et l'écorce lors de l'utilisation du grattoir et permet de protéger le rouleau des impuretés crées lors de l'opération de grattage.

Le dispositif comporte une lame de nettoyage dont le bord libre est au contact ou à faible distance de la surface applicatrice de l'applicateur, pour enlever mousses ou lichens ou autres débris adhérant à l'applicateur.

Dans un exemple de réalisation, le dispositif comporte un passe-sangle pour baudrier, par exemple porté par un support agencé pour se fixer de façon amovible sur le récipient, notamment comportant une pince élastique agencée pour s'encliqueter sur le récipient et un embout agencé pour recevoir l'extrémité libre du récipient.

Le dispositif peut comporter un carter de protection anti-salissures, de préférence porté par un support agencé pour se fixer de façon amovible sur le récipient, et adapté à recouvrir au moins partiellement l'applicateur en l'absence d'utilisation. Il peut s'agir du même support que celui portant le passe-sangle.

L'invention se rapporte également à un ensemble comportant le dispositif tel que défini ci-dessus et le récipient de peinture, notamment de peinture fluorescente, fixé sur le dispositif.

Le dispositif peut être porté par un baudrier ou contenu dans une sacoche.

L'invention se rapporte également à un procédé de marquage de troncs d'arbres à l'aide d'un ensemble selon l'invention, comportant l'étape consistant à gratter l'écorce avec le grattoir, notamment pour y enlever mousses ou lichens, et à appliquer la peinture à l'aide de l'applicateur sur l'écorce ainsi nettoyée.

L'invention pourra être mieux comprise à la lecture de la description détaillée qui va suivre, d'exemples de mise en œuvre non limitatifs de celle-ci, et à l'examen du dessin annexé, sur lequel :
- les figures 1 et 2 sont des vues en perspective, sous différents angles de vue, d'un dispositif de marquage selon un premier mode de réalisation de l'invention ;
- la figure 3 représente le dispositif de marquage des figures 1 et 2 sans le rouleau applicateur;
- la figure 4 est une coupe partielle du dispositif des figures 1 et 2, faisant apparaître la structure de l'applicateur ;
- la figure 5 est une coupe longitudinale partielle du dispositif des figures 1 et 2;
- la figure 6 est une autre coupe représentant des détails de réalisation de l'applicateur ;
- les figures 7 à 9 sont des vues de côté d'un dispositif de marquage selon un deuxième mode de réalisation, en cours d'utilisation;
- la figure 10 est une vue de côté d'un dispositif de marquage selon un troisième mode de réalisation de l'invention ;
- la figure 11 est une vue de face selon XI du dispositif de marquage de la figure 10; et
- les figures 12 et 13 illustrent la possibilité de munir le dispositif de marquage d'un passe-sangle.

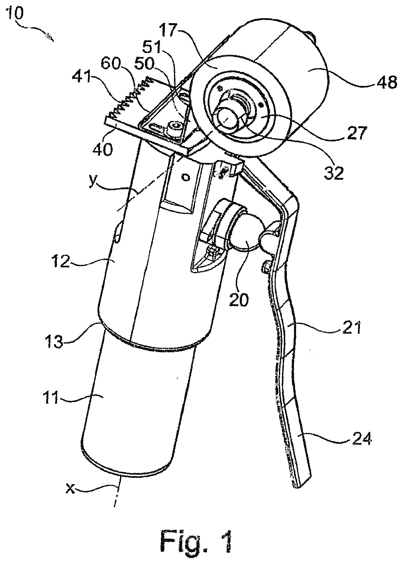

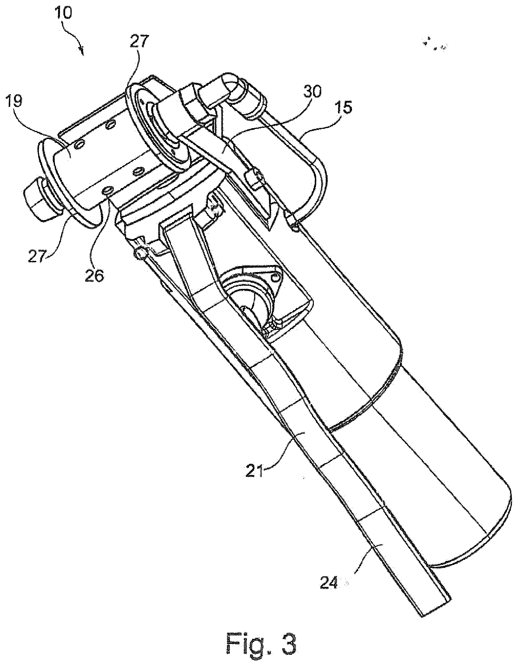

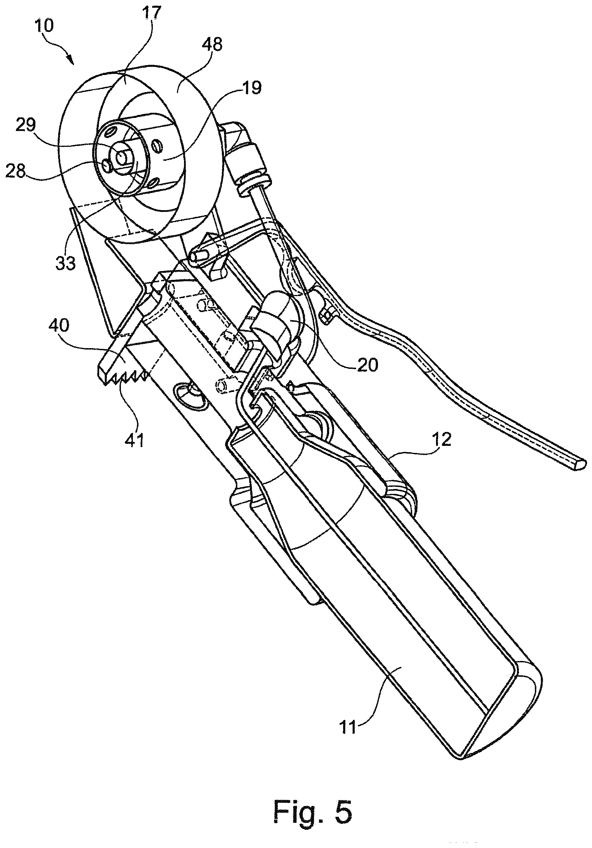

Le dispositif de marquage 10 représenté aux figures 1 à 6 comporte un récipient 11 contenant une peinture à appliquer sur des troncs d'arbres, de préférence une peinture fluorescente.

Le dispositif 10 comporte un corps 12 définissant un logement présentant à une extrémité une ouverture 13 dans laquelle est inséré le récipient 11. Ce dernier peut être retenu par vissage ou encliquetage.

Le dispositif 10 comporte un applicateur 17 constitué par un rouleau pouvant tourner autour d'un axe de rotation Y perpendiculaire à l'axe longitudinal X du dispositif 10.

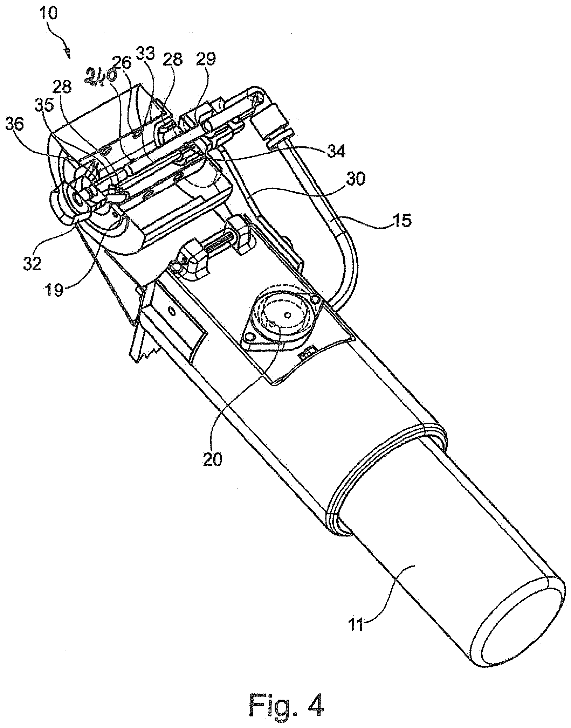

L'applicateur 17 est alimenté en produit par un mécanisme de distribution intégré au dispositif 10, constitué dans l'exemple considéré d'une pompe manuelle 20 de type bouton, raccordée d'une part en entrée à un tube plongeur immergé dans le récipient 11 et d'autre part en sortie à un conduit flexible 15. Ce dernier est raccordé à un axe de support creux 33, visible sur la figure 4 notamment, décrit plus en détail par la suite.

Une poignée 21 définit une surface d'appui 24 sur laquelle l'utilisateur peut appuyer pour actionner la pompe 20.

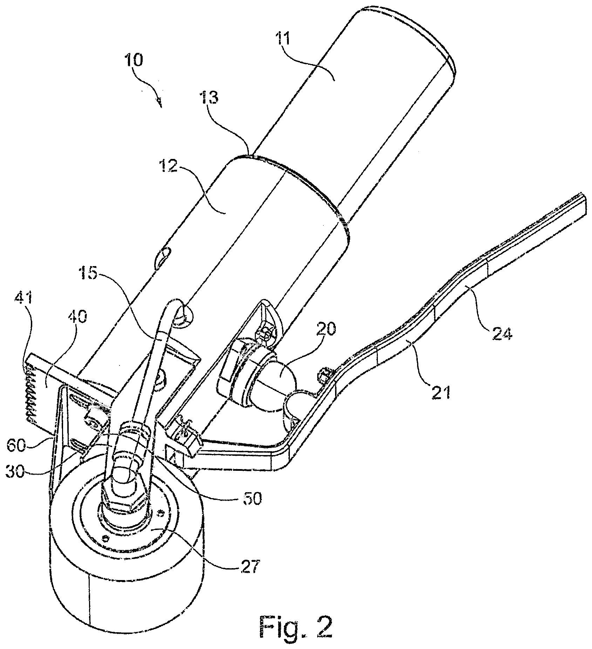

L'applicateur 17 est porté par un bras 30 coudé, de sorte que l'axe Y se trouve contenu dans un plan qui est décalé du même côté que la poignée 21 par rapport à l'axe longitudinal X du dispositif, comme on peut voir notamment sur la figure 2.

Le dispositif 10 est muni du côté opposé à la poignée 21 d'un grattoir 40 qui est par exemple, comme illustré, fixé à l'extrémité du corps 12 opposée à l'ouverture 13, étant orienté perpendiculairement à l'axe longitudinal X et de préférence muni à son extrémité libre de dents 41.

Le dispositif 10 peut comporter, comme illustré, une lame de nettoyage 50 dont le bord libre 51 vient au contact ou à faible distance, de préférence moins de 3mm de la surface applicatrice 48 de l'applicateur 17 pour nettoyer celle-ci, par exemple enlever des mousses ou lichens ayant transféré à sa surface et qui pourraient nuire à la qualité de l'application.

Un écran 60 peut être prévu au-dessus du grattoir 40, pour réduire le risque d'un contact accidentel de l'applicateur 17 avec le tronc lors de l'opération de nettoyage de celui-ci à l'aide du grattoir 40 et pour réduire les risques de projections de lichens et mousses sur l'applicateur 17 lors de la phase de grattage.

L'écran 60 se présente par exemple sous la forme d'une lame similaire à la lame de nettoyage 50, mais qui se prolonge obliquement vers l'applicateur 17 en éloignement du corps 12 sur une hauteur supérieure, et notamment dépasse le niveau de l'axe Y.

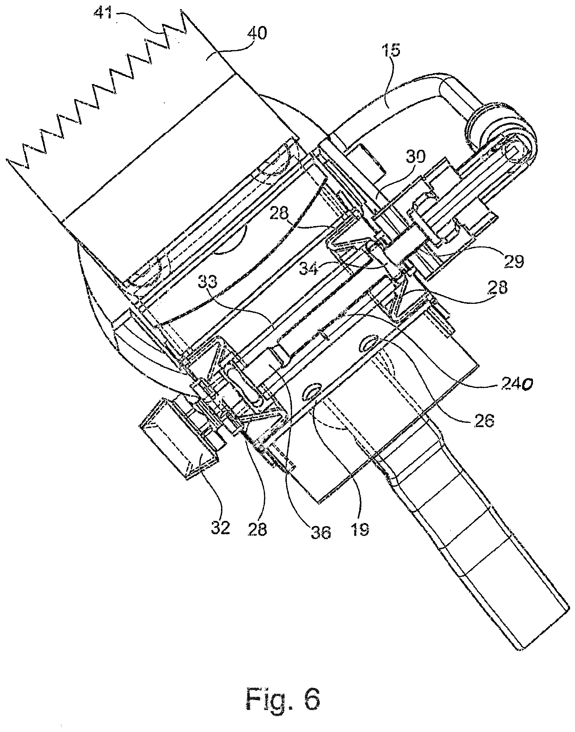

L'axe de support creux 33 comporte, comme visible sur la figure 6 notamment, des orifices 240 pour la sortie du produit, par exemple au nombre de huit, disposés par paires autour de l'axe Y.

Le rouleau comporte un manchon en mousse ou tout autre matériau adapté, retenu sur le moyeu 19 à l'aide de flasques 27. Le moyeu 19 est muni de trous 26 pour le passage du produit.

Comme visible sur la figure 4 notamment, des joints à lèvre 28 portés par l'axe creux 33 s'appliquent sur la face radialement intérieure du moyeu 19.

Un tube d'alimentation 29, raccordé au conduit 15, pénètre dans l'axe creux 33, du côté du bras 30, pour amener le produit à l'intérieur de celui-ci.

L'axe creux 33 est obturé du côté opposé au bras 30 par un bouchon 32.

Un joint torique 34 s'interpose entre le tube d'alimentation 29 et l'axe creux 33, au niveau du joint 28 adjacent au bras 30. Un autre joint torique 35 s'interpose entre l'axe creux 33 et un picot d'obturation 36, maintenu par le bouchon 32, comme visible sur les figures 4 et 6.

Pour utiliser le dispositif 10, l'utilisateur commence par nettoyer si cela est nécessaire l'écorce pour y enlever mousses ou lichens présents à sa surface, en utilisant le grattoir 40.

Ensuite, une fois la surface de réception de peinture nettoyée, l'utilisateur peut retourner le dispositif 10, et faire rouler l'applicateur 17 à son contact tout en appuyant au préalable et si nécessaire sur la poignée 21 pour réimbiber l'applicateur 17.

L'applicateur 17 peut comporter un manchon en laine à poils courts ou en matière synthétique absorbante, une telle matière favorisant l'application de la peinture sur l'écorce, tendant à s'encrasser moins vite que d'autres matériaux et étant d'une longévité-résistance permettant de n'envisager un remplacement du manchon qu'à la fin d'une campagne de martelage, ce qui limite les déchets. La peinture amenée par les orifices 26 du moyeu 19 traverse le manchon du fait de sa porosité ou de la présence d'orifices à cet effet.

La largeur du grattoir 40 est par exemple comprise entre 30 et 60 mm.

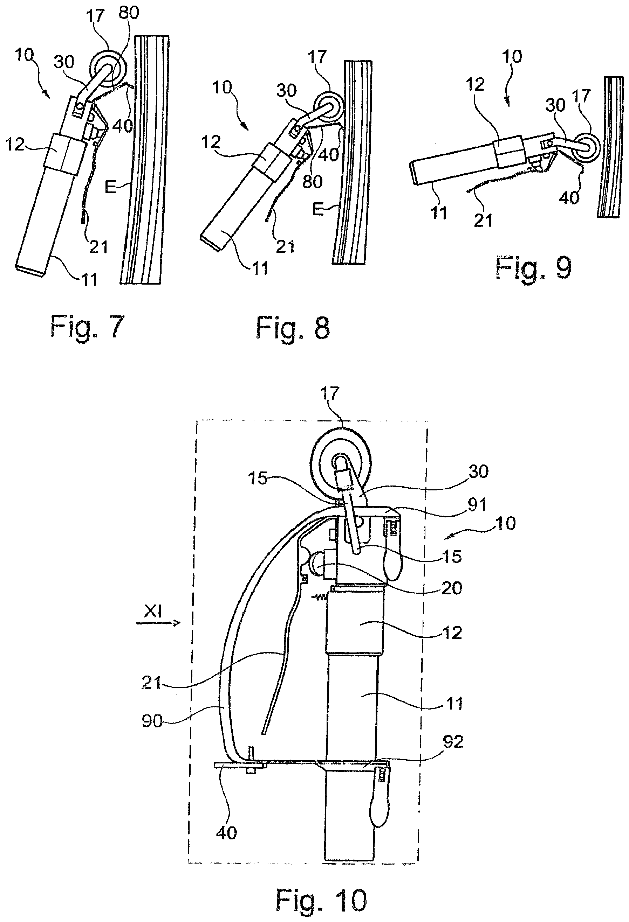

Les figures 7 à 9 représentent une variante du dispositif 10 dans laquelle le grattoir 40 est disposé du même côté que la poignée 21, étant fixé au corps 12 par un bras 80 s'étendant obliquement vers le haut et vers l'avant, tout comme le bras 30, mais avec une inclinaison plus forte, de telle sorte que le grattoir 40 se situe sensiblement sous le niveau de l'axe de rotation Y.

La figure 7 illustre le dispositif 10 lors de l'utilisation du grattoir 40 pour nettoyer la surface d'une écorce E, et les figures 8 et 9 l'utilisation du même dispositif pour l'application de peinture sur l'écorce E.

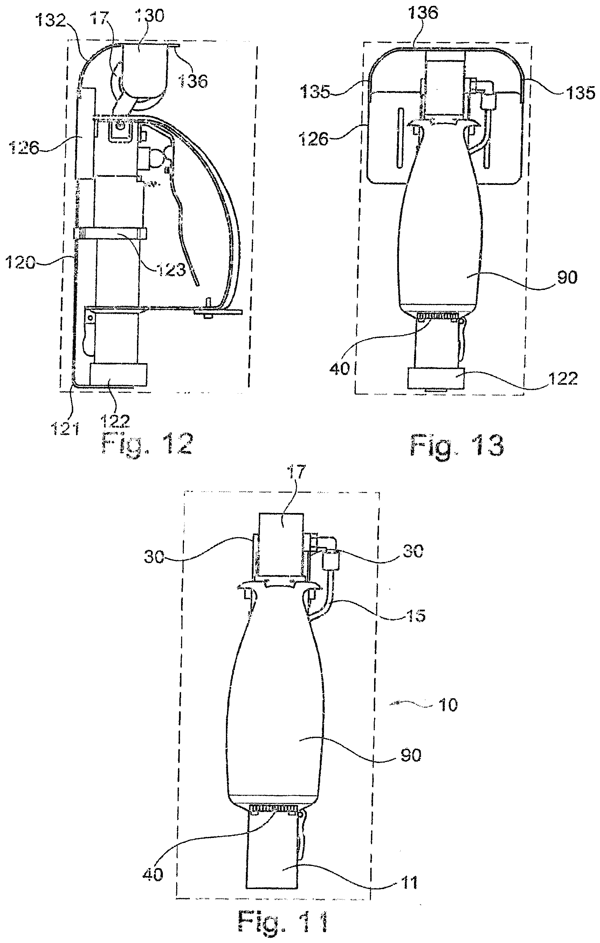

On va maintenant décrire, en se référant aux figures 10 et 11, une variante de réalisation du dispositif 10.

Cette variante diffère essentiellement de celle des figures 1 à 6 par la manière d'assurer la fixation du grattoir 40 et par la présence d'un carter de protection 90 de la main de l'utilisateur, fixé en avant de la poignée 21.

Le carter 90 présente une forme arquée, étant fixé à son extrémité supérieure par une bride 91 à l'extrémité supérieure du corps 12, et à son extrémité inférieure par une bride 92 sur le récipient 11.

Les brides 91 et 92 peuvent être serrées à l'aide d'écrous munis chacun d'un levier de serrage pivotant, connus en eux-mêmes.

Le grattoir 40 est fixé sur le carter 90 à la base de celui-ci et fait légèrement saillie vers l'avant par rapport au carter 90. La présence de ce dernier réduit le risque que l'utilisateur se servant du grattoir 40 ne se râpe le dessus de la main sur l'écorce.

Pour provoquer la distribution de peinture, l'utilisateur passe ses doigts entre le carter 90 et la poignée 21 et appuie sur celle-ci.

Les dispositifs qui viennent d'être décrits peuvent recevoir un accessoire permettant de l'accrocher à un baudrier, tel qu'illustré sur les figures 12 et 13. Cet accessoire comporte un support 120 muni d'un passe-sangle 126 permettant la fixation du dispositif sur un baudrier.

Ce support 120 comporte par exemple, comme illustré, une lame 121 qui est munie à son extrémité inférieure d'un retour 122 destiné à s'engager sur l'extrémité inférieure du récipient 11. La lame 121 peut également porter une pince 123 qui se fixe par encliquetage sur le récipient 11, pour retenir le support 120 sur le dispositif 10.

Cet accessoire comporte en partie supérieure un carter 130 de protection de l'applicateur 17. Ce carter est formé par un prolongement incurvé 132 de la lame 121, au-dessus du passe-sangle 126 et par deux oreilles latérales 135 qui se raccordent à leur extrémité supérieure à la paroi supérieure 136 du carter 130.

Bien entendu, l'invention est limitée aux caractéristiques techniques décrites dans les revendications suivantes.

## Revendications

1. Dispositif (10) de marquage d'une écorce (E) de tronc d'arbre, comportant :
- un logement pour recevoir au moins partiellement un récipient (11) contenant une peinture,
- un applicateur (17) alimenté en peinture par le récipient,
- un organe de commande (21) de la distribution de peinture, définissant une surface d'appui (24) sur laquelle l'utilisateur peut appuyer pour l'alimentation de l'applicateur en peinture,
- un grattoir (40) configuré pour nettoyer l'écorce de l'arbre avant l'application de la peinture,
- une lame de nettoyage (50) dont le bord libre est au contact ou à faible distance de la surface applicatrice (48) de l'applicateur pour enlever mousses ou lichens ou autres débris adhérant à l'applicateur.

2. Dispositif (10) selon la revendication 1, l'applicateur (17) étant alimenté depuis un espace intérieur à celui-ci, le dispositif (10) comportant un conduit (15) d'alimentation en peinture de l'applicateur (17) à partir du récipient (11).

3. Dispositif (10) selon la revendication 2, dans lequel l'applicateur (17) est un rouleau.

4. Dispositif (10) selon la revendication 3, le dispositif (10) étant allongé selon un axe longitudinal (X), le rouleau (17) tournant autour d'un axe de rotation (Y) contenu dans un plan décalé du côté de la surface d'appui (24) de l'organe de commande (21), par rapport à l'axe longitudinal (X) du dispositif (10).

5. Dispositif(10) selon l'une quelconque des revendications 1 à 4, le grattoir (40) et l'applicateur (17) étant entièrement situés du même côté d'un plan comprenant l'axe longitudinal (X) du dispositif (10).

6. Dispositif(10) selon l'une quelconque des revendications précédentes, comportant un carter (90) de protection de la main de l'utilisateur, la surface d'appui (24) de l'organe de commande (21) étant disposée entre le carter de protection (90) et un corps (12) du dispositif (10), le grattoir (40) étant de préférence fixé sur le carter (90) de protection, notamment à sa base, le carter de protection ayant de préférence une forme arquée, convexe vers l'extérieur.

7. Dispositif selon l'une quelconque des revendications précédentes, l'organe de commande (21) comportant une poignée articulée sur un corps (12) du dispositif cette poignée définissant la surface d'appui (24).

8. Dispositif selon l'une quelconque des revendications précédentes, le grattoir (40) et l'applicateur (17) étant disposés de façon à permettre dans un même mouvement de nettoyer l'écorce et d'appliquer la peinture sur l'écorce ainsi nettoyée.

9. Dispositif selon l'une quelconque des revendications précédentes, comportant un passe-sangle pour baudrier, de préférence porté par un support agencé pour se fixer de façon amovible sur le récipient, notamment comportant une pince élastique (123) agencée pour s'encliqueter sur le récipient et un retour (122) agencé pour recevoir une extrémité du récipient.

10. Dispositif selon l'une quelconque des revendications précédentes, comportant un carter de protection anti-salissures (136), de préférence porté par un support agencé pour se fixer de façon amovible sur le récipient et adapté à recouvrir au moins partiellement l'applicateur (17) en l'absence d'utilisation.

11. Dispositif selon les revendications 9 et 10, le carter de protection anti-salissures et le passe sangle étant portés par le même support.

12. Dispositif selon l'une quelconque des revendications 1 à 11, comportant un écran (60) en arrière de l'applicateur (17) et au-dessus du grattoir (40).

13. Ensemble comportant le dispositif (10) tel que défini dans l'une quelconque des revendications précédentes et le récipient de peinture, notamment de peinture fluorescente, fixé de façon amovible sur le dispositif.

14. Procédé de marquage de l'écorce (E) de troncs d'arbres à l'aide d'un ensemble selon la revendication 13 comportant l'étape consistant à gratter l'écorce (E) avec le grattoir (40), notamment pour y enlever mousses ou lichens, et à appliquer de la peinture à l'aide de l'applicateur (17) sur l'écorce (E) ainsi nettoyée.

## Patentansprüche

1. Vorrichtung (10) zum Markieren der Rinde (E) eines Baumstammes, welche umfasst:
- einen Aufnahmeraum zum wenigstens teilweisen Aufnehmen eines Behälters (11), der eine Farbe enthält,
- einen Applikator (17), der durch den Behälter mit Farbe versorgt wird,
- ein Steuerorgan (21) für die Abgabe von Farbe, welches eine Druckfläche (24) definiert, auf welche der Benutzer drücken kann, um den Applikator mit Farbe zu versorgen,
- einen Schaber (40), der dafür ausgelegt ist, die Rinde des Baumes vor dem Auftrag der Farbe zu reinigen,
- eine Reinigungsklinge (50), deren freier Rand mit der Applikationsfläche (48) des Applikators in Kontakt steht oder sich in geringem Abstand von ihr befindet, um Moose oder Flechten oder andere Verschmutzungen, die am Applikator anhaften, zu entfernen.

2. Vorrichtung (10) nach Anspruch 1, wobei der Applikator (17) von einem innerhalb desselben befindlichen Raum aus versorgt wird, wobei die Vorrichtung (10) eine Leitung (15) zur Versorgung des Applikators (17) mit Farbe von dem Behälter (11) aus umfasst.

3. Vorrichtung (10) nach Anspruch 2, wobei der Applikator (17) eine Walze ist.

4. Vorrichtung (10) nach Anspruch 3, wobei die Vorrichtung (10) entlang einer Längsachse (X) lang gestreckt ist, wobei sich die Walze (17) um eine Drehachse (Y) dreht, die in einer Ebene enthalten ist, die in Bezug auf die Längsachse (X) der Vorrichtung (10) zur Seite der Druckfläche (24) des Steuerorgans (21) hin versetzt ist.

5. Vorrichtung (10) nach einem der Ansprüche 1 bis 4, wobei sich der Schaber (40) und der Applikator (17) vollständig auf derselben Seite einer Ebene befinden, welche die Längsachse (X) der Vorrichtung (10) enthält.

6. Vorrichtung (10) nach einem der vorhergehenden Ansprüche, welche ein Schutzgehäuse (90) für die Hand des Benutzers umfasst, wobei die Druckfläche (24) des Steuerorgans (21) zwischen dem Schutzgehäuse (90) und einem Körper (12) der Vorrichtung (10) angeordnet ist, wobei der Schaber (40) vorzugsweise an dem Schutzgehäuse (90), insbesondere an seinem Unterteil, befestigt ist, wobei das Schutzgehäuse vorzugsweise eine nach außen konvexe, bogenförmige Gestalt aufweist.

7. Vorrichtung nach einem der vorhergehenden Ansprüche, wobei das Steuerorgan (21) einen an einem Körper (12) der Vorrichtung angelenkten Griff umfasst, wobei dieser Griff die Druckfläche (24) definiert.

8. Vorrichtung nach einem der vorhergehenden Ansprüche, wobei der Schaber (40) und der Applikator (17) derart angeordnet sind, dass ermöglicht wird, in ein und derselben Bewegung die Rinde zu reinigen und die Farbe auf die so gereinigte Rinde aufzutragen.

9. Vorrichtung nach einem der vorhergehenden Ansprüche, welche eine Gurtschlaufe für einen Klettergurt umfasst, die vorzugsweise von einer Halterung getragen wird, die dazu eingerichtet ist, lösbar an dem Behälter befestigt zu werden, und insbesondere eine elastische Klemme (123), die dazu eingerichtet ist, auf den Behälter aufgeschnappt zu werden, und einen abgewinkelten Teil (122), der dazu eingerichtet ist, ein Ende des Behälters aufzunehmen, umfasst.

10. Vorrichtung nach einem der vorhergehenden Ansprüche, welche ein Schutzgehäuse gegen Verschmutzung (136) umfasst, das vorzugsweise von einer Halterung getragen wird, die dazu eingerichtet ist, lösbar an dem Behälter befestigt zu werden, und das so beschaffen ist, dass es den Applikator (17), wenn er nicht verwendet wird, wenigstens teilweise abdeckt.

11. Vorrichtung nach den Ansprüchen 9 und 10, wobei das Schutzgehäuse gegen Verschmutzung und die Gurtschlaufe von ein und derselben Halterung getragen werden.

12. Vorrichtung nach einem der Ansprüche 1 bis 11, welche einen Schutzschild (60) hinter dem Applikator (17) und über dem Schaber (40) umfasst.

13. Anordnung, welche die Vorrichtung (10), wie in einem der vorhergehenden Ansprüche definiert, und den Behälter mit Farbe, insbesondere mit Leuchtfarbe, der lösbar an der Vorrichtung befestigt ist, umfasst.

14. Verfahren zum Markieren der Rinde (E) von Baumstämmen mithilfe einer Anordnung nach Anspruch 13, welches den Schritt des Schabens der Rinde (E) mit dem Schaber (40), insbesondere um Moose oder Flechten von ihr zu entfernen, und des Auftragens der Farbe mithilfe des Applikators (17) auf die so gereinigte Rinde (E) umfasst.

## Claims

1. Device (10) for marking tree trunk bark (E), comprising:
- a housing for at least partially receiving a container (11) containing a paint,
- an applicator (17) supplied with paint by the container,
- a control member (21) controlling the dispensing of paint, defining a bearing surface (24) on which the user can press to supply the applicator with paint,
- a grater (40) configured to clean the bark of the tree before the application of the paint,
- a cleaning blade (50) whose free edge is in contact with or at a short distance from the applying surface (48) of the applicator to remove mosses or lichens or other debris adhering to the applicator.

2. Device (10) according to Claim 1, the applicator (17) being supplied from an internal space thereof, the device (10) comprising a duct (15) for supplying paint to the applicator (17) from the container (11) .

3. Device (10) according to Claim 2, wherein the applicator (17) is a roller.

4. Device (10) according to Claim 3, the device (10) being elongated on a longitudinal axis (X), the roller (17) rotating about an axis of rotation (Y) contained in a plane offset on the side of the bearing surface (24) of the control member (21), with respect to the longitudinal axis (X) of the device (10) .

5. Device (10) according to any one of Claims 1 to 4, the grater (40) and the applicator (17) being entirely situated on the same side of a plane containing the longitudinal axis (X) of the device (10) .

6. Device (10) according to any one of the preceding claims, comprising a protective casing (90) protecting the hand of the user, the bearing surface (24) of the control member (21) being disposed between the protective casing (90) and a body (12) of the device (10), the grater (40) being preferably fixed onto the protective casing (90), notably at its base, the protective casing preferably having an outwardly convex arched form.

7. Device according to any one of the preceding claims, the control member (21) comprising a handle articulated on a body (12) of the device, this handle defining the bearing surface (24).

8. Device according to any one of the preceding claims, the grater (40) and the applicator (17) being disposed so as to allow the bark to be cleaned and the paint to be applied to the duly cleaned bark in one and the same movement.

9. Device according to any one of the preceding claims, comprising a strap loop for a harness, preferably borne by a support arranged to be fixed removably onto the container, notably comprising an elastic clamp (123) arranged to be snap-fitted onto the container and a return (122) arranged to receive an end of the container.

10. Device according to any one of the preceding claims, comprising an antifouling protective casing (136), preferably borne by a support arranged to be fixed removably onto the container and suitable for at least partially covering the applicator (17) in the absence of use.

11. Device according to Claims 9 and 10, the antifouling protective casing and the strap loop being borne by the same support.

12. Device according to any one of Claims 1 to 11, comprising a screen (60) on the back of the applicator (17) and above the grater (40).

13. Assembly comprising the device (10) as defined in any one of the preceding claims and the paint container, notably containing fluorescent paint, fixed removably onto the device.

14. Method for marking the bark (E) of tree trunks using as assembly according to Claim 13, comprising the step consisting in grating the bark (E) with the grater (40), notably to remove mosses or lichens therefrom, and in applying paint using the applicator (17) on the duly cleaned bark (E).
